# EUROPEAN PATENT APPLICATION

(11) **EP 4 324 361 A1**
(43) Date of publication of application: **21.02.2024**
(21) Application number: 22190717.3
(22) Date of filing: 17.08.2022
(51) Int. Cl.: A47J 19/02, A47J 43/07, A47J 43/044

(54) **JUICER ACCESSORY, JUICER AND METHOD OF USING THE SAME**

(71) Applicant: Versuni Holding B.V., 5656 AE Eindhoven (NL)
(72) Inventor: HOLZBAUER, Juergen, 5656 AE Eindhoven (NL)
(74) Representative: Vollering, Stefanus Franciscus Maria

(57) **Abstract**

Provided is a juicer accessory (100) for a handheld kitchen appliance having a motorized drive system (202) for driving rotation of a food blending member (204). The juicer accessory comprises a container lid (102) for closing a container (104), and a filter insert (106) for inserting into the container. The filter insert delimits a space (108) for receiving food and the food blending member. The juicer accessory further comprises a drive transfer assembly (110) configured to, while the container remains closed by the container lid, couple the motorized drive system to the food blending member received in the space and to the filter insert inserted into the container to enable rotation of the food blending member within the space and rotation of the filter insert within the container. The drive transfer assembly is detachable from the container together with the container lid. Further provided is a juicer (200) comprising the juicer accessory, and a method of juicing using such a juicer accessory.

## Description

### FIELD OF THE INVENTION

The invention relates to a juicer accessory for a handheld kitchen appliance having a motorized drive system, and a juicer comprising the juicer accessory and the handheld kitchen appliance. The invention further relates to a method of juicing using such a juicer accessory.

### BACKGROUND OF THE INVENTION

Besides highly nutritious fruit and vegetable juices, single fruit and mixed fruit smoothies have become very popular across the world. To prepare such a wide variety of drinks the consumer has tended to require multiple devices, such as juicers, blenders and citrus presses. Storage of such multiple devices, e.g. on a kitchen countertop, can be challenging.

Blender bases for portable blender containers, such as portable jugs and mugs, have become popular for providing a variety of fresh fruit and vegetable drinks on the go, for example when going to the office, to school or on a trip.

Relatively high power, e.g. 500 to 2000 W, blender stations have also been developed for assisting with fine blending of fruit and vegetables.

Such blender stations have, however, been found to be rather overpowered, and add additional food processing equipment to potentially already overcrowded kitchen storage areas.

Hybrid devices are available in the market which can be used to prepare both juices and smoothies, but such devices are standalone, relatively large in size (in order to prepare relatively large volumes of juice or smoothie in one go), and tend to be expensive and/or difficult to use.

It would be desirable to find a way to allow the consumer to prepare fresh fruit and vegetable drinks, for example a relatively small amount of such drinks for consumption on the go, in a simple and low-cost way which minimizes addition of new equipment to the consumer's kitchen storage.

### SUMMARY OF THE INVENTION

The invention is defined by the claims.

According to examples in accordance with an aspect of the invention, there is provided a juicer accessory for a handheld kitchen appliance having a motorized drive system for driving rotation of a food blending member, the juicer accessory comprising: a container lid for closing a container; a filter insert for inserting into the container, the filter insert delimiting a space for receiving food and the food blending member; and a drive transfer assembly configured to, while the container remains closed by the container lid, couple the motorized drive system to the food blending member received in the space and to the filter insert inserted into the container to enable rotation of the food blending member within the space and rotation of the filter insert within the container, wherein the drive transfer assembly is detachable from the container together with the container lid.

The juicer accessory enables juicing using a handheld kitchen appliance. Handheld kitchen appliances are relatively compact and may, depending on the attachment selected to be rotated by the motorized drive system, provide various food processing functionalities. The juicer accessory may assist in terms of adding a juicing functionality whilst minimizing loss of kitchen storage space.

The term "handheld kitchen appliance" as used herein may refer to any top driven kitchen appliance manipulable by hand in order to enable the handheld kitchen appliance to process food when positioned above a container in which the food is received, with such manipulation comprising moving the handheld kitchen appliance into position above the container and optionally grasping the handheld kitchen appliance during the food processing of the food beneath the handheld kitchen appliance in the container.

In some embodiments, the handheld kitchen appliance is in the form of a bar blender.

In alternative embodiments, the handheld kitchen appliance is a top driven food processor or a food chopper.

The drive transfer assembly included in the juicer accessory conveniently allows the same handheld kitchen appliance to be used for both rotating the food blending member to blend the food into juice and pulp and rotating the filter insert to assist in separating the juice from the pulp.

It is noted that rotating the filter insert to assist in separating the juice from the pulp can be regarded as a centrifugal juicing function, since the rotation of the filter insert assists the juice to pass through a juice permeable wall of the filter insert with the pulp remaining on an inner surface of the juice permeable wall facing the space.

Since the configuration of the drive transfer assembly couples the motorized drive system to the food blending member and to the filter insert while the container remains closed by the container lid, there may be no need to remove the container lid in order to, for instance, switch between rotating of the food blending member and rotating of the filter insert. This may assist to enhance user convenience.

Due to the drive transfer assembly enabling rotation of both the food blending member and the filter insert being detachable from the container together with the container lid, the design of the container (which may or may not be supplied to the user together with the container lid, filter insert and drive transfer assembly of the juicer accessory) can be simplified. Such a simplified container design may, for example, facilitate cleaning of the container after use, due to such drive transfer functionality not being included in the container.

The drive transfer assembly is, in some embodiments, configured to enable rotation of the food blending member and rotation of the filter insert at the same time, or sequentially.

In some embodiments, the drive transfer assembly may be configured to permit the user to switch, while the container is closed by the container lid, between the food blending member being rotated by the motorized drive system, the filter insert being rotated by the motorized drive system and/or both of the food blending member and the filter insert being concurrently rotated by the motorized drive system.

More generally, the drive transfer assembly is, in some embodiments, configured to enable, while the container is closed by the container lid, independent control of the rotation of the food blending member and the rotation of the filter insert.

Such independent control may, for example, enable the food blending member to be rotated at a different speed than the filter insert.

Alternatively or additionally, the food blending member and the filter insert may be rotated at different times.

For instance, the food blending member may be rotated to blend the food in a first step while the filter insert is not being controlled to rotate, with the filter insert being subsequently rotated in a second step to filter the juice while the food blending member is not being controlled to rotate.

Such independent control can be implemented in any suitable manner, for example by the drive transfer assembly comprising a suitable gear and/or clutch assembly by which torque from the motorized drive system is transferrable to the food blending member and/or to the filter insert.

In some embodiments, the drive transfer assembly comprises a planetary gear assembly.

A planetary gear assembly may offer a simple yet effective way of rotating the filter insert while also allowing rotation of the food blending member, e.g. at different rotational speeds relative to each other. The compactness of such a planetary gear assembly may further facilitate the detachability of the drive transfer assembly together with the container lid from the container.

In some embodiments, a gear ratio of the planetary gear assembly is such that the filter insert rotates more slowly than a drive shaft of the motorized drive system.

In some embodiments, the drive transfer assembly is switchable between transferring drive from the motorized drive system to the filter insert and to the food blending member.

Such switching may be implemented in any suitable manner, for example by the drive transfer assembly comprising a clutch arrangement configurable to transfer drive from the motorized drive system to the food blending member and/or to the filter insert.

The drive transfer assembly may comprise a user interface actuatable by a user to cause switching between transferring drive from the motorized drive system to the food blending member and/or to the filter insert.

In some embodiments the juicer accessory comprises the container.

Thus, the consumer may be conveniently supplied with the container, as well as the container lid for closing, e.g. sealingly closing, the container, the filter insert and the drive transfer assembly.

As an alternative or in addition to the container being included in the juicer accessory, the food blending member may be included in the juicer accessory.

In some embodiments, the juicer accessory comprises a further container receivable in the container, with the filter insert being receivable in the further container.

The further container can, for example, act as a barrier for pulp and/or juice between the filter insert and the container.

In some embodiments, the further container is rotatably receivable in the container, and the drive transfer assembly is configured to couple the motorized drive system to the filter insert and to the further container.

When the further container with the filter insert mounted, e.g. fixedly mounted, therein are rotated, a centrifugal force can cause the juice to flow through the juice permeable wall of the filter insert, with the pulp being retained within the filter insert.

In some embodiments, one or more juice channels are provided between the further container and the container to permit the juice from the further container to pass into the container. Thus, after operation, the user can remove the further container from the container such that the container remains containing only the juice removed from the food. In this way, the user is left with a container, e.g. a portable container, that can be closed, e.g. sealed, and transported for later consumption of the juice therein.

In some embodiments, the juicer accessory comprises a further lid for closing the further container.

The further lid may close, e.g. seal against, the further container such that, during blending of the food product, passage of pulp from the further container to the container is minimized or prevented. Furthermore, the further lid can assist to reduce the risk of pulp spilling from the further container into the container during removal of the further container from the container.

The further lid may also help in transporting the further container to empty the contents elsewhere, such as in a bin or other storage container. The further lid may further assist in terms of providing a further barrier between the user and the food blending member, which may comprise one or more sharp blades. Thus, the further lid may assist to protect the user from harm while removing the further container from the container.

In some embodiments, the drive transfer assembly is configured to couple the motorized drive system to the further container via the further lid such that the further container is rotatable by the motorized drive system together with the filter insert.

In at least some embodiments, the drive transfer assembly comprises a driving axle mounted at, e.g. housed within, the container lid for transferring drive from the motorized drive system to the food blending member.

In embodiments, in which the juicer accessory includes the further lid, the further lid may include a further driving axle couplable to the driving axle.

Thus, drive may be transferred from the motorized drive system to the driving axle and to the further driving axle included in the further lid in order to rotate the food blending member within the further container.

In some embodiments, the further lid is an integral component of the container lid. The further lid may thus be detachable from the container together with the container lid.

This may mean that there are fewer components of the juicer accessory for the user to assemble/disassemble, and this may also facilitate storing of the juicer accessory.

In some embodiments, the filter insert comprises a juice permeable wall, with the juice permeable wall being configured to permit juice from the food to pass through the juice permeable wall and restrict pulp from passing through the juice permeable wall.

In certain embodiments, the juice permeable wall comprises one or more inwardly extending juice permeable portions that each inwardly extend towards an axis of rotation about which the filter insert is rotatable via the drive transfer assembly.

Such inwardly extending juice permeable portion(s) may assist in terms of efficiently separating the juice from the pulp.

Furthermore, the inwardly extending portion(s) can also act as flow breaker(s) for the blending function. Any number of inwardly extending portions, e.g. 2, 3, 4, 5 or more, can be included in the filter insert.

According to another aspect there is provided is a juicer comprising: a handheld kitchen appliance having a motorized drive system for driving rotation of a food blending member, and a juicer accessory according to any of the embodiments described herein.

In some embodiments, the motorized drive system and the drive transfer assembly are configured to: rotate the filter insert at a rotational speed of 500 to 5000, preferably between 3000 and 4000, revolutions per minute; and/or rotate the food blending member at a rotational speed of 8000 to 20000, preferably between 9000 and 12000, revolutions per minute.

Further provided is a method of juicing using a handheld kitchen appliance having a motorized drive system, a food blending member, a container, a filter insert, and a container lid, the drive transfer assembly being detachable from the container together with the container lid, the method comprising: receiving the filter insert in the container; receiving food and the food blending member in a space delimited by the filter insert; coupling the filter insert and the food blending member to the motorized drive system via the drive transfer assembly; and using the motorized drive system, while the container remains closed by the container lid, to rotate the food blending member in the space and to rotate the filter insert in the container.

In some embodiments, using the motorized drive system comprises rotating the food blending member and rotating the filter insert at the same time.

Alternatively, using the motorized drive system may comprise rotating the food blending member and subsequently rotating the filter insert.

In such embodiments, the using may, for example, include switching the drive transfer assembly from transferring drive from the motorized drive system to the food blending member to transferring drive from the motorized drive system to the filter insert.

In some embodiments, the method further comprises, subsequently to the using the motorized drive system, detaching the drive transfer assembly, together with the container lid, from the container.

More generally embodiments described herein in relation to the method may be applicable to the juicer accessory and the juicer, and embodiments described herein in relation to the juicer accessory or the juicer may be applicable to the method.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts a juicer accessory according to an example together with a handheld kitchen appliance;
FIG. 2 provides a cross-sectional view of a juicer accessory according to another example;
FIG. 3 shows a juicer comprising the juicer accessory shown in FIG. 2 and a handheld kitchen appliance;
FIG. 4 schematically depicts switching of a drive transfer assembly according to an example between rotating of a food blending member and rotating of a filter insert;
FIG. 5 provides a perspective view of a filter insert according to an example; and
FIG. 6 provides a flowchart of a method of juicing according to an example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a juicer accessory for a handheld kitchen appliance having a motorized drive system for driving rotation of a food blending member. The juicer accessory comprises a container lid for closing a container, and a filter insert for inserting into the container. The filter insert delimits a space for receiving food and the food blending member. The juicer accessory further comprises a drive transfer assembly configured to, while the container remains closed by the container lid, couple the motorized drive system to the food blending member received in the space and to the filter insert inserted into the container to enable rotation of the food blending member within the space and rotation of the filter insert within the container. The drive transfer assembly is detachable from the container together with the container lid. Further provided is a juicer comprising the juicer accessory, and a method of juicing using such a juicer accessory.

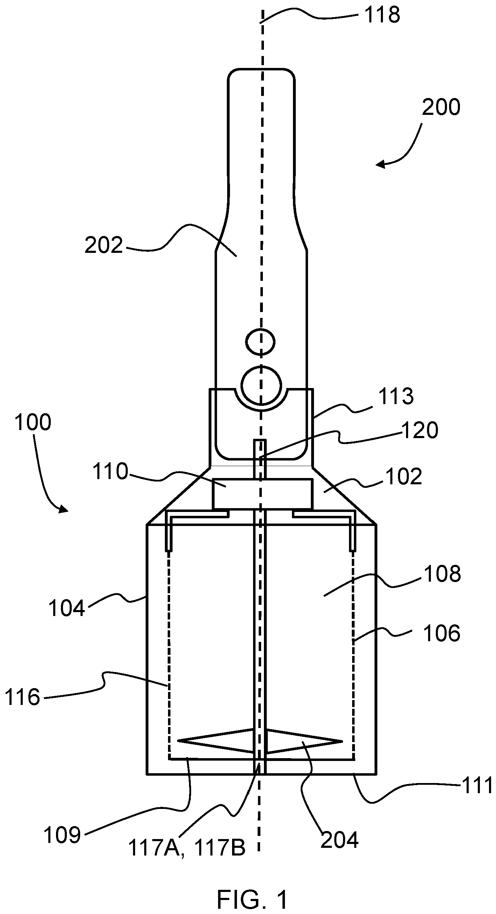

FIG. 1 shows a juicer accessory 100 according to an example. The juicer accessory 100 is for use with a handheld kitchen appliance's motorized drive system 202.

In at least some embodiments, such as that shown in FIG. 1, the motorized drive system 202 is housed within an elongate housing whose external surface comprises a handle portion for grasping by a user.

In such embodiments, the handheld kitchen appliance may be regarded as being in the form of a "bar blender".

The motorized drive system 202 may drive rotation of a food blending member 204. The food blending member 204 may be included in the juicer accessory 100, or may be provided to the user separately from the juicer accessory 100, for example by the food blending member 204 being supplied to the user together with the handheld kitchen appliance.

The present disclosure more generally contemplates the juicer accessory 100 being provided, e.g. supplied, to the user together with the handheld kitchen appliance. Thus, an aspect of the present disclosure provides a juicer 200 comprising the juicer accessory 100 and the handheld kitchen appliance.

The food blending member 204 may have any suitable design provided that the food blending member 204 is capable of being rotated to cut, grind and/or shred food (not visible) in order to release juice therefrom.

In some embodiments, such as that shown in FIG. 1, the food blending member 204 comprises, or is in the form of, a blender knife.

The juicer accessory 100 comprises a container lid 102 for closing a container 104. The container lid 102 may assist, when closing the container 104, to retain food, pulp and/or juice within the container 100, e.g. during rotation of the food blending member 204 to cut, grind and/or shred the food to release juice from the food.

In some embodiments, the container lid 102 may sealingly close the container 104 so as to retain juice within the container 104 when closed by the container lid 102.

The container lid 102 may be formed from any suitable material, such as plastic.

In at least some embodiments, the container lid 102 engages the container 104 via a polygonal interface between the container lid 102 and the container 104.

Such a polygonal interface may assist to minimise or prevent unintentional rotation of the container lid 102 relative to the container 104, e.g. as a result of rotation of other component(s) being driven by the motorized drive system 202.

The juicer accessory 100 may include the container 104. Thus, the user may be conveniently supplied with the container 104, as well as the container lid 102 for closing the container 104 and, for example, engaging the container 104 via the polygonal interface between the container lid 102 and the container 104.

In other embodiments, the container 104 may be provided, e.g. supplied, to the user together with the handheld kitchen appliance.

The container 104 may be formed from any suitable material, such as plastic. In some non-limiting examples, the container 104 is formed from a transparent plastic to enable the user to view the food processing, and in particular juice production, taking place inside the container 104.

Referring again to FIG. 1, the juicer accessory 100 comprises a filter insert 106 for inserting into the container 104. The filter insert 106 delimits a space 108 in which the food and the food blending member 204 can be received.

The juicer accessory 100 further comprises a drive transfer assembly 110. The drive transfer assembly 110 is configured to couple the motorized drive system 202 to the food blending member 204 received in the space 108 and to the filter insert 106 inserted into the container 104 to enable rotation of the food blending member 204 within the space 108 and rotation of the filter insert 106 within the container 104.

In some embodiments, the filter insert 106 comprises a food supporting base 109 on which the food is supported when the food is received in the space 108 and the juicer accessory 100 is orientated for use.

The filter insert 106 may assist in separating the juice from the pulp resulting from the cutting, grinding and/or shredding of the food caused by rotation of the food blending member 204 by the motorized drive system 202 via the drive transfer assembly 110.

The drive transfer assembly 110 additionally coupling the motorized drive system 202 to the filter insert 106 may provide a centrifugal juicing function, with the rotation of the filter insert 106 assisting the juice to pass through the filter insert 106, leaving the pulp and any uncut, unground and/or non-shredded food within the space 108.

The drive transfer assembly 110 is configured to permit rotation of the food blending member 204 and rotation of the filter insert 106 while the container 104 remains closed by the container lid 102. Thus, there may be no need to remove or detach the container lid 102 from the container 104 in order to, for instance, switch between rotating of the food blending member 204 and rotating of the filter insert 106. This may assist to enhance user convenience.

The drive transfer assembly 110 is detachable from the container 104 together with the container lid 102. This may simplify the design of the container 104, enabling, for instance, the container 104 to be straightforwardly employed for other food processing functions. The latter may assist to free up kitchen storage space because adding the juicing functionality to the handheld kitchen appliance need not require a dedicated container 104.

Alternatively or additionally, such a simplified container 104 design may facilitate cleaning of the container 104 after use, due to such drive transfer functionality not being included in the container 104 once the container lid 102 has been, together with the drive transfer assembly 110, detached from the container 104.

In at least some embodiments, such as that shown in FIG. 1, the juicer accessory 100 is operable by the motorized drive system 202 of the handheld kitchen appliance rotating the food blending member 204 and rotating the filter insert 106 from above the container 104 when orientated for use.

In other words, the juicer accessory 100 is configured for "top-down" rotation of the food blending member 204 and the filter insert 106. This represents a difference from conventional blender stations whose motorized drive systems are arranged underneath the container when orientated for use.

This may mean that, in the present context, a base 111 of the container 104 need not include an interface for attaching the container 104 to a subjacent blender station.

The base 111 of the container 104 may instead, for instance, enable the container 104, the juicer accessory 100, and the handheld kitchen appliance to be supported directly on a kitchen countertop or table.

In some embodiments, the base 111 of the container 104 includes a mounting portion, for example comprising a non-slip portion (not visible in FIG. 1), e.g. rubber feet, for contacting a kitchen countertop or table.

In some embodiments, such as that shown in FIG. 1, the container lid 102 includes a lid interface 113 arranged to facilitate cooperation of the handheld kitchen appliance with the container lid 102, thereby to assist engagement of the motorized drive system 202 with the drive transfer assembly 110.

The lid interface 113 may include, or be defined by, a recess defined in the container lid 102, which recess receives at least a portion of the handheld kitchen appliance's elongate housing.

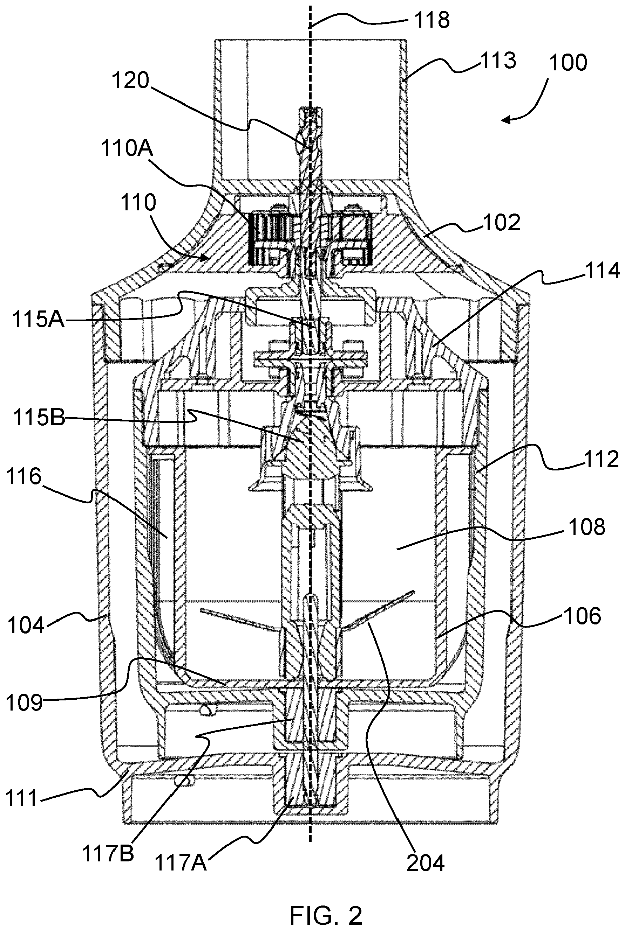

In some embodiments, such as that shown in FIG. 2, the juicer accessory 100 comprises a further container 112 receivable in the container 104, with the filter insert 106 being receivable in the further container 112. The further container 112 can, for example, act as a barrier for pulp and/or juice between the filter insert 106 and the container 104.

The further container 112 can be formed from any suitable material, such as plastic.

In some embodiments, such as that shown in FIG. 2, the further container 112 is rotatably receivable in the container 104, and the drive transfer assembly 110 is configured to couple the motorized drive system 202 to the filter insert 106 and to the further container 112. Thus, the further container 112 and the filter insert 106 received therein may be rotated together by the motorized drive system 202 via the drive transfer assembly 110.

When the further container 112 with the filter insert 106 mounted, e.g. fixedly mounted, therein are rotated, a centrifugal force can cause the juice to flow out of the space 108 through the filter insert 106, leaving the pulp within the space 108.

One or more juice channels (not visible) may be provided between the further container 112 and the container 104 to permit the filtered juice received in the further container 112 to pass into the container 104.

Thus, after operation, the user can remove the further container 112 from the container 104 such that the container 104 remains containing only the juice removed from the food. In this way, the user is left with a container 104, e.g. a portable container 104, that can be closed, e.g. sealed, and transported for later consumption of the juice therein.

In some embodiments, such as that shown in FIG. 2, the juicer accessory 100 comprises a further lid 114 for closing the further container 112.

The further lid 114 may close, e.g. seal against, the further container 112 such that, during blending of the food, passage of pulp from the further container 112 to the container 104 is minimized or prevented. Furthermore, the further lid 114 can assist to reduce the risk of pulp spilling from the further container 112 into the container 104 during removal of the further container 112 from the container 104.

The further lid 114 may also help in transporting the further container 112 to empty the contents elsewhere, such as in a bin or other storage container. The further lid 112 may further assist in terms of providing a further barrier between the user and the food blending member 204, which may comprise one or more sharp blades. Thus, the further lid 114 may assist to protect the user from harm while removing the further container 112 from the container 104.

The further lid 114 may be formed from any suitable material, such as plastic.

In some embodiments, such as that shown in FIG. 2, the drive transfer assembly 110 is configured to couple the motorized drive system 202 to the further container 112 via the further lid 114 such that the further container 112 is rotatable by the motorized drive system 202 together with the filter insert 106.

Such coupling of the drive transfer assembly 110 to the further container 112 via the further lid 114 can be implemented in any suitable manner.

In some embodiments, the further lid 114 engages the further container 112 via a (further) polygonal interface between the further container 112 and the further lid 114.

Such a (further) polygonal interface may assist to transfer rotation of the further lid 114 to the further container 112.

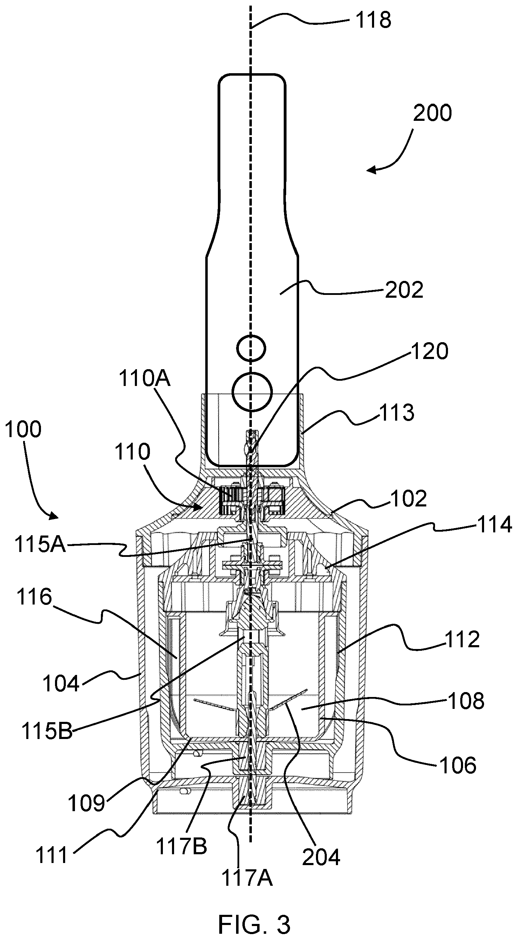

In some embodiments, such as that shown in FIGs. 2 and 3, the container lid 102 engages the container 104 via a polygonal interface, and the further lid 114 engages the further container 112 via a further polygonal interface.

With continued reference to FIG. 2, the drive transfer assembly 110 may include a driving axle 115A mounted at, e.g. housed within, the container lid 102 for transferring drive from the motorized drive system 202 to the food blending member 204.

In embodiments, in which the juicer accessory 100 includes the further lid 114, the further lid 114 may include a further driving axle 115B couplable to the driving axle 115A. An example of this is shown in FIG. 2.

Thus, drive may be transferred from the motorized drive system 202 to the driving axle 115A and to the further driving axle 115B included in the further lid 114 in order to rotate the food blending member 204 within the further container 114.

In some embodiments, the further lid 114 is an integral component of the container lid 102. This may mean that there are fewer components of the juicer accessory 100 for the user to assemble/disassemble, and this may also facilitate storing of the juicer accessory 100.

In some embodiments, such as that shown in FIGs. 1 and 2, the food blending member 204 and/or the filter insert 106 are rotatably supported in the container 104 by a bearing assembly 117A, 117B.

At least part of the bearing assembly 117A, 117B may be mounted at the base 111 of the container 104, with one or both of the food blending member 204 and the filter insert 106 being rotatably supported in the container 104 when received therein.

In some embodiments, such as that shown in FIG. 2, the bearing assembly 117A, 117B comprises a first bearing 117A arranged to rotatably support the filter insert 106 when the filter inserted 106 is inserted into the container 104.

In the particular embodiment shown in FIG. 2, the first bearing 117A is arranged to rotatably support the further container 112, and thus the filter insert 106 fixedly mounted to the further container 112, in the container 104.

The first bearing 117A may be arranged at the base 111 of the container 104, as shown in FIG. 1.

In embodiments in which the juicer accessory 100 comprises the further container 112, the bearing assembly 117A, 117B may include a second bearing 117B arranged to rotatably support the food blending member 204 in the further container 112, and in particular in the space 108 delimited by the filter insert 106 received in the further container 112.

In at least some embodiments, the filter insert 106 comprises a juice permeable wall 116, with the juice permeable wall 116 being configured to permit juice from the food to pass through the juice permeable wall 116 and restrict pulp and any uncut, unground and/or non-shredded food from passing through the juice permeable wall 116.

The juice permeable wall 116 may extend, e.g. upstand, from the food supporting base 109 of the filter insert 106. Examples of this are shown in FIGs. 1 and 2.

Any suitable type of juice permeable wall 116 can be contemplated provided that the juice permeable wall 116 is capable of filtering juice. For example, the juice permeable wall 116 may comprise, or be defined by, one or more mesh/sieve portions.

The juice permeable wall 116 may be arranged relative to an axis of rotation 118 about which the filter insert 106 is rotatable via the drive transfer assembly 110 such that rotation of the filter insert 106 about the axis 118 causes juice and pulp to be flung against the juice permeable wall 116.

In this way, filtering of the juice is facilitated by the rotation of the filter insert 106.

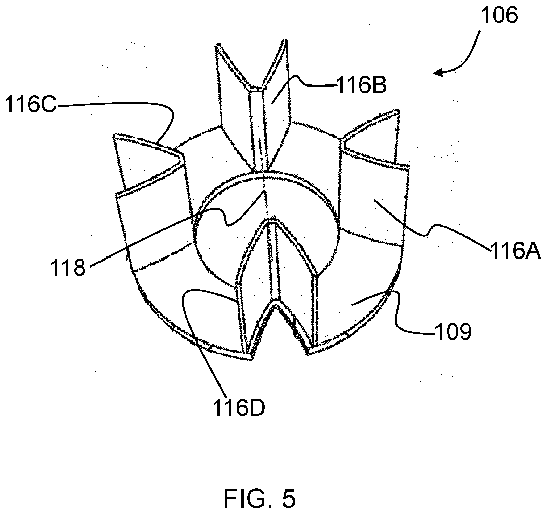

Any suitable arrangement of the juice permeable wall 116 can be contemplated. A particular example of such an arrangement of the juice permeable wall 116 is described herein below with reference to FIG. 5.

FIG. 3 shows a juicer 200 comprising the juicer accessory 100 shown in FIG. 2 and a handheld kitchen appliance. In this non-limiting example, the handheld kitchen appliance's elongate housing interfaces with a lid interface 113 in the form of a recess defined in the container lid 102, in which recess a portion of the elongate housing is received such that the motorized drive system 202 engages the drive transfer assembly 110.

The drive transfer assembly 110 is, in some embodiments, configured to enable rotation of the food blending member 204 and rotation of the filter insert 106 at the same time, or sequentially.

The motorized drive system 202 may include any suitable motor.

In some embodiments, the motorized drive system 202 includes a brushless direct current motor.

The operation of such a brushless direct current motor has been found to be particularly effective in rotating the food blending member 204 and rotating the filter insert 106.

In a non-limiting example, the drive transfer assembly 110 integrated with the container lid 102 connects the motor power located within the elongate housing, e.g. handle portion, of the handheld kitchen appliance with the filter insert 106 and the food blending member 204, thereby making it possible to produce high quality smoothies and blends with an existing household appliance.

Since the handle portion of the handheld kitchen appliance can be moved in space relatively quickly by the consumer, a fast and efficient blending process is enabled, where process stops and blockages can be straightforwardly repaired by the consumers, e.g. by a simple and immediate upside-down movement of the juicer 200.

The motorized drive system 202, e.g. comprising or being defined by a direct current motor, such as a brushless direct current motor, may thus be made, to drive rotation of the filter insert 106 to produce clear juice.

Such rotation of the filter insert 106 may be via rotation of the further lid 112, as previously described.

This driving of rotation of the filter insert 106 can be regarded as being in addition to the motorized drive system's 202 usual function of generating kinetic energy which drives rotation of the food blending member 204, e.g. a blender knife.

In some embodiments, the drive transfer assembly 110 is configured to permit the user to switch, while the container 104 is closed by the container lid 102, between the food blending member 204 being rotated by the motorized drive system 202, the filter insert 106 being rotated by the motorized drive system 202 and/or both of the food blending member 204 and the filter insert 106 being concurrently rotated by the motorized drive system 202.

More generally, the drive transfer assembly 110 is, in some embodiments, configured to enable, while the container 104 is closed by the container lid 102, independent control of the rotation of the food blending member 204 and the rotation of the filter insert 106.

Such independent control may, for example, enable the food blending member 204 to be rotated at a different speed than the filter insert 106.

In some embodiments, the motorized drive system 202 and the drive transfer assembly 110 are configured to rotate the filter insert 106 at a rotational speed of 500 to 5000, preferably between 3000 and 4000, revolutions per minute.

Such a rotational speed may provide efficient filtering of the juice through the juice permeable wall 116 of the filter insert 106.

Alternatively or additionally, the motorized drive system 202 and the drive transfer assembly 110 may be configured to rotate the food blending member 204 at a rotational speed of 8000 to 20000, preferably between 9000 and 12000, revolutions per minute.

Such a rotational speed may provide efficient cutting, grinding and/or shredding of the food to release juice therefrom.

In some embodiments, the food blending member 204 and the filter insert 106 may be rotated at different times.

For instance, the food blending member 204 may be rotated to blend the food in a first step while the filter insert 106 is not being controlled to rotate, with the filter insert 106 being subsequently rotated in a second step to filter the juice released during the first step while the food blending member 204 is not being controlled to rotate.

Such independent control can be implemented in any suitable manner, for example by the drive transfer assembly 110 comprising a suitable gear and/or clutch assembly by which torque from the motorized drive system 202 is transferrable to the food blending member 204 and/or to the filter insert 106.

In some embodiments, the drive transfer assembly 110 is switchable between transferring drive from the motorized drive system 202 to the filter insert 106 and to the food blending member 204.

Such switching may be implemented in any suitable manner, for example by the drive transfer assembly 110 comprising a clutch arrangement configurable to transfer drive from the motorized drive system 202 to the food blending member 204 and/or to the filter insert 106.

The drive transfer assembly 110 may comprise a user interface actuatable by a user to cause switching between transferring drive from the motorized drive system 202 to the food blending member 204 and/or to the filter insert 106.

In some embodiments, such as that shown in FIGs. 2 and 3, the drive transfer assembly 110 comprises a planetary gear assembly 110A.

The planetary gear assembly 110A may reside in the container lid 102, rotate around a drive shaft 120 connecting the planetary gear assembly to the motorized drive system 202, and temporarily couple with the further lid 114.

More generally, a planetary gear assembly 110A may offer a simple yet effective way of rotating the filter insert 106 while also allowing rotation of the food blending member 204, e.g. at different rotational speeds relative to each other. The compactness of such a planetary gear assembly 110A may further facilitate the detachability of the drive transfer assembly 110 together with the container lid 102 from the container 104.

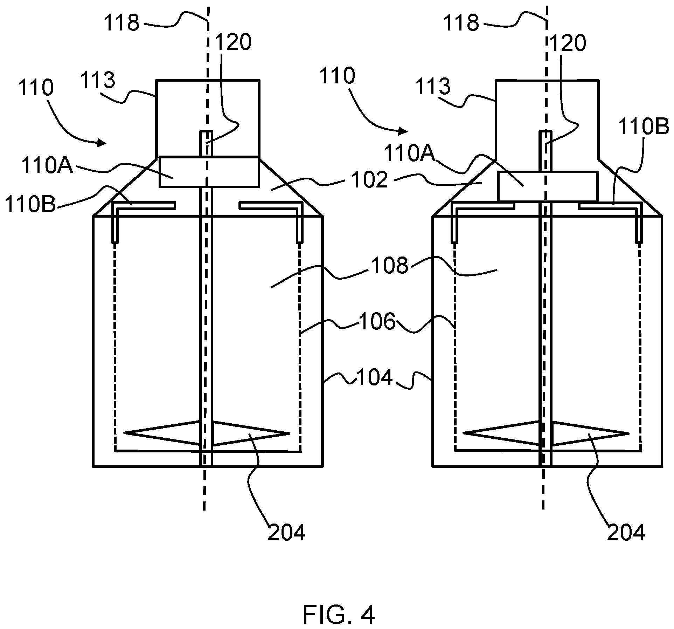

In some embodiments, such as that schematically shown in FIG. 4, the drive transfer assembly 110 comprises the planetary gear assembly 110A and a coupler 110B releasably engagable with the planetary gear assembly 110A, with the coupler 110B being arranged to transfer drive from the planetary gear assembly 110A to the filter insert 106 when the coupler 110B is engaged by the planetary gear assembly 110A.

In such embodiments, the planetary gear assembly 110A may be rotatable around the drive shaft 120, which drive shaft 120 can be driven by the motorized drive system 202.

The coupler 110B is releasably engaged by the planetary gear assembly 110A, in this non-limiting example by the planetary gear assembly 110A moving relative to the coupler 110B along the axis of rotation 118.

In a first configuration shown on the left hand side of FIG. 4, the planetary gear assembly 110A is separated, in this non-limiting example elevated, from the coupler 110B such that the coupler 110B is not engaged by the planetary gear assembly 110A.

In this first configuration, the filter insert 106, and in some embodiments the filter insert 106 together with the further container 112, is not rotated by the motorized drive system 202 via the drive transfer assembly 110, but the food blending member 204 is rotated by the motorized drive system 202 via the drive transfer assembly 110.

In a second configuration shown on the right hand side of FIG. 4, the coupler 110B is engaged with the planetary gear assembly 110A and the filter insert 106 is rotated, and in some embodiments the filter insert 106 and the further container 112 together are rotated, by the motorized drive system 202 via the drive transfer assembly 110.

In some embodiments, a gear ratio of the planetary gear assembly 110A is such that the filter insert 106 rotates more slowly than the drive shaft 120, when the planetary gear assembly is transferring drive from the planetary gear assembly 110A to the filter insert 106, e.g. when the coupler 110B is engaged by the planetary gear assembly 110A.

Rotation of the filter insert 106, e.g. together with the further container 112, facilitates juice filtering, in other words provides a juice extraction function, as previously described.

In embodiments in which the drive transfer assembly 110 comprises the planetary gear assembly 110A and the coupler 110B, the drive transfer assembly 110 can be regarded as a planetary gear box unit. This planetary gear box unit is detachable from the container 104 together with the container lid 102, as previously described.

It is noted that in other embodiments, the coupling between the motorized drive system 202 and the filter insert 106 is via magnetic coupling.

The clutch function can also be implemented by an overrunning clutch arranged such that when the motor of the motorized drive system 202 is rotating in a first direction only the shaft 120 with the blending member 204 is rotated at a first rotational speed, and when the motor of the motorized drive system is rotating in a second direction opposite to the first direction, the planetary gear assembly 110A and hence the filter inlet 106 is rotated at a second rotational speed lower than the first rotational speed.

In some embodiments, such as that shown in FIG. 5, the juice permeable wall 116 comprises, or may be defined by, one or more inwardly extending juice permeable portions 116A, 116B, 116C, 116D that each inwardly extend towards the axis of rotation 118 about which the filter insert 106 is rotatable via the drive transfer assembly 110.

Each of the juice permeable portions 116A, 116B, 116C, 116D may extend, e.g. upstand, from the food supporting base 109 of the filter insert 106.

Such inwardly extending juice permeable portion(s) 116A, 116B, 116C, 116D may assist in terms of efficiently separating the juice from the pulp.

Furthermore, the inwardly extending portion(s) 116A-D can also act as flow breaker(s) for the blending function. Any number of inwardly extending portions 116A-D, e.g. 2, 3, 4, 5 or more, can be included in the filter insert 106.

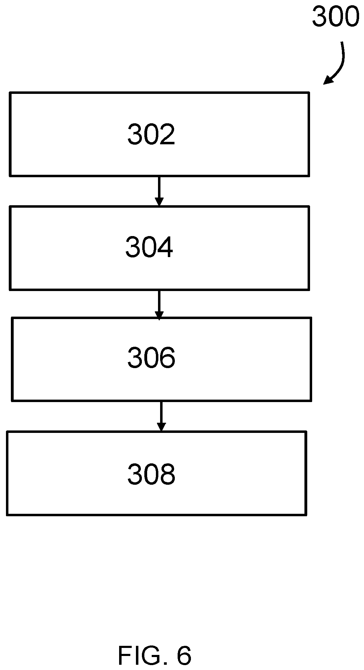

FIG. 6 provides a flowchart of a method 300 of juicing according to an example. The method 300 comprises receiving 302 a filter insert in a container, receiving 304 food and a food blending member in a space delimited by the filter insert, coupling 306 the filter insert and the food blending member to a motorized drive system via a drive transfer assembly, and using 308 the motorized drive system, while the container remains closed by the container lid, to rotate the food blending member in the space and to rotate the filter insert in the container.

The method 300 may utilize the juicer accessory 100 according to any of the embodiments disclosed herein, in combination with a handheld kitchen appliance comprising the motorized drive system 202.

In some embodiments, using 308 the motorized drive system comprises rotating of the food blending member and rotating of the filter insert at the same time.

Alternatively, using 308 the motorized drive system may comprise rotating the food blending member and subsequently rotating the filter insert.

In such embodiments, the using 308 may, for example, include switching the drive transfer assembly from transferring drive from the motorized drive system to the food blending member to transferring drive from the motorized drive system to the filter insert.

In some embodiments, the method 300 further comprises, subsequently to the using 308 the motorized drive system, detaching the drive transfer assembly, together with the container lid, from the container.

In embodiments in which the juicer accessory comprises the further container, the receiving 304 may comprise receiving, e.g. filling, the further container, and in particular the space delimited by the filter insert when the filter insert has been received in the further container, with food, for example cut-up pieces of fruit and/or vegetables and optionally some liquid. The food blending member, e.g. blender knife, is also received in the space, as previously described.

In such embodiments, the method 300 may comprise covering the further container with the further lid, and receiving 302 the filter insert together with the further container in the container.

The container, in which the further container is received, may then be covered by the container lid, and the handheld kitchen device interfaced with the container lid, with the motorized drive system coupling 306 to the filter insert and the food blending member via the drive transfer assembly.

The motorized drive system may then be used 308, e.g. initially for 30 seconds at medium to full speed to rotate the food blending member, for instance at 9000 to 12000 revolutions per minute, and subsequently switched, e.g. by switching a gear level to engage the above-described planetary gear assembly with the filter insert, in this example via the further container. The filter insert (together with the further container) may be rotated, for example, at 3000 to 4000 revolutions per minute to filter the juice.

The container lid may then be detached, together with the drive transfer assembly, to access the juice in the container, which juice may be poured out of the container.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A juicer accessory (100) for a handheld kitchen appliance having a motorized drive system (202) for driving rotation of a food blending member (204), the juicer accessory comprising:
a container lid (102) for closing a container (104);
a filter insert (106) for inserting into the container, the filter insert delimiting a space (108) for receiving food and the food blending member; and
a drive transfer assembly (110) configured to, while the container remains closed by the container lid, couple the motorized drive system to the food blending member received in said space and to the filter insert inserted into the container to enable rotation of the food blending member within said space and rotation of the filter insert within the container, wherein the drive transfer assembly is detachable from the container together with said container lid.

2. The juicer accessory (100) according to claim 1, wherein the drive transfer assembly (110) is configured to enable, while the container (104) is closed by the container lid (102), independent control of the rotation of the food blending member (204) and the rotation of the filter insert (106).

3. The juicer accessory (100) according to claim 1 or claim 2, wherein the drive transfer assembly (110) comprises a planetary gear assembly (110A).

4. The juicer accessory (100) according to any one of claims 1 to 3, wherein the drive transfer assembly (110) is switchable between transferring drive from the motorized drive system (202) to the filter insert (106) and to the food blending member (204).

5. The juicer accessory (100) according to any one of claims 1 to 4, comprising said container (104).

6. The juicer accessory (100) according to any one of claims 1 to 5, comprising a further container (112) receivable in said container (104), said filter insert (106) being receivable in the further container.

7. The juicer accessory (100) according to claim 6, wherein the further container (112) is rotatably receivable in the container (104), the drive transfer assembly (110) being configured to couple the motorized drive system (202) to the filter insert (106) and to the further container.

8. The juicer accessory (100) according to claim 6 or claim 7, comprising a further lid (114) for closing the further container (112).

9. The juicer accessory (100) according to claim 8, wherein the drive transfer assembly (110) is configured to couple the motorized drive system (202) to the further container (112) via the further lid (114) such that the further container is rotatable by the motorized drive system together with the filter insert (106).

10. The juicer accessory (100) according to claim 8 or claim 9, wherein the further lid (114) is an integral component of the container lid (102).

11. The juicer accessory (100) according to any one of claims 1 to 10, wherein the filter insert (106) comprises a juice permeable wall (116), the juice permeable wall being configured to permit juice from the food to pass through the juice permeable wall and restrict pulp from passing through the juice permeable wall.

12. The juicer accessory (100) according to claim 11, wherein the juice permeable wall (116) comprises one or more inwardly extending juice permeable portions (116A, 116B, 116C, 116D) that each inwardly extend towards an axis of rotation (118) about which the filter insert (106) is rotatable via the drive transfer assembly (110).

13. A juicer (200) comprising:
a handheld kitchen appliance having a motorized drive system (202) for driving rotation of a food blending member (204); and
a juicer accessory (100) according to any one of claims 1 to 12; optionally wherein the handheld kitchen appliance is a bar blender, a chopper or a top driven food processor.

14. The juicer (200) according to claim 13, wherein the motorized drive system (202) and said drive transfer assembly (110) are configured to:
rotate the filter insert (106) at a rotational speed of 500 to 5000, preferably between 3000 and 4000, revolutions per minute; and/or
rotate the food blending member (204) at a rotational speed of 8000 to 20000, preferably between 9000 and 12000, revolutions per minute.

15. A method (300) of juicing using a handheld kitchen appliance having a motorized drive system, a food blending member, a container, a filter insert, and a container lid, the drive transfer assembly being detachable from the container together with said container lid, the method comprising:
receiving (302) the filter insert in the container;
receiving (304) food and the food blending member in a space delimited by the filter insert;
coupling (306) the filter insert and the food blending member to the motorized drive system via said drive transfer assembly; and
using (308) the motorized drive system, while the container remains closed by the container lid, to rotate the food blending member in the space and to rotate the filter insert in the container.
